# EUROPÄISCHE PATENTSCHRIFT

(11) **EP 1 377 354 B1**
(45) Veröffentlichungstag und Bekanntmachung des Hinweises auf die Patenterteilung: **06.07.2005**
(21) Anmeldenummer: 02732342.7
(22) Anmeldetag: 22.03.2002
(51) Int. Cl.: B01D 33/073, B01D 33/42, B01D 35/30

(54) **MEHRSTUFENROTATIONSFILTER**
MULTI-STAGE ROTARY FILTER
FILTRE ROTATIF A PLUSIEURS ETAGES

(30) Priorität: 23.03.2001 DE 10114411
(43) Veröffentlichungstag der Anmeldung: 07.01.2004
(73) Patentinhaber: Genthiner Maschinen- und Vorrichtungsbau GmbH, 39307 Genthin (DE)
(72) Erfinder: Büssing, Reinhard, 39307 Genthin (DE)
(74) Vertreter: Patentanwälte Hauck, Graalfs, Wehnert, Döring, Siemons, Schildberg
(86) Internationale Anmeldenummer: PCT/DE2002/001061
(87) Internationale Veröffentlichungsnummer: WO 2002/076573

(56) Entgegenhaltungen:
- DE-A- 19 810 441
- US-A- 5 312 544
- US-A- 5 785 637
- US-B1- 6 217 637

## Beschreibung

Die vorliegende Erfindung betrifft einen Rotationsfilter mit einer rotierenden Welle, einem im Abstand von der Welle angeordneten und mit dieser unter Ausbildung einer Filtratkammer drehfest verbundenen Filtermedium und einem das Filtermedium unter Ausbildung einer die zu filtrierende Substanz aufnehmenden Filterkammer umgebenden Filtergehäuse, wobei die Welle als Hohlwelle mit mindestens einer Öffnung zur Aufnahme und Abführung des Filtrates aus der Filtratkammer ausgebildet ist.

Ein derartiger Rotationsfilter ist aus der DE 198 10 441 A1 bekannt. Mit derartigen Rotationsfiltern lassen sich Flüssigkeitsgemische oder aber auch Feststoff/Flüssigkeitsgemische jeglicher Art filtrieren. Das zu filtrierende Gemisch wird normalerweise unter Druck in die Filterkammer eingeführt. Aufgrund dem zwischen der Filtratkammer und der Filterkammer herrschenden Druckunterschied gelangt das im Gemisch enthaltene Filtrat durch das Filtermedium in die Filtratkammer und von dort in das Innere der Hohlwelle und wird von hier zum Filtratauslass abgeführt.

Der vorliegenden Erfindung liegt die Aufgabe zugrunde, einen Rotationsfilter der eingangs wiedergegebenen Art zu schaffen, der bei einer kompakten Bauweise eine besonders effiziente Filtration ermöglicht.

Diese Aufgabe wird erfindungsgemäß bei einem Rotationsfilter der angegebenen Art dadurch gelöst, dass
der Filter als Mehrstufenfilter mit mindestens zwei Filtratkammern und diesen zugeordneten Filterkammern ausgebildet ist, die entlang der einen einzigen Antrieb aufweisenden Welle vorgesehen sind,
die Welle jeweils einen einer Filtratkammer zugeordneten Hohlwellenabschnitt mit mindestens einer Öffnung zur Aufnahme und Abführung des Filtrates aus der jeweiligen Filtratkammer aufweist
und sich der jeweilige Hohlwellenabschnitt bis in die nächste Filterkammer erstreckt und eine in diese Filterkammer mündende Öffnung zur Weiterleitung des Filtrates in die nächste Filterkammer besitzt.

Der erfindungsgemäß ausgebildete Rotationsfilter hat den Vorteil, dass unter Verwendung eines einzigen Antriebes mehrere unterschiedliche Filtrationsprozesse in einem Durchlauf gleichzeitig mit verschiedenen Filtermedien durchgeführt werden können, und zwar bei gleichem Filtrationsdruck, so dass die Filtermedien kaum belastet werden. Vorzugsweise finden zwei Filtrationsstufen Verwendung, wobei jedoch auch drei oder mehr Stufen Anwendung finden können, je nach Anwendungsfall.

Ist der erfindungsgemäße Filter als Zweistufenfilter ausgebildet, so weist er zwei Filtratkammern und zwei diesen zugeordneten Filterkammern auf, die entlang der Welle angeordnet sind. Die zu filtrierende Substanz, bei der es sich um ein Flüssigkeitsgemisch oder um ein Feststoff/ Flüssigkeitsgemisch handeln kann, wird in die Filterkammer der ersten Stufe eingeführt. Durch das zusammen mit der Welle rotierende Filtermedium mit leicht rauher Oberfläche entstehen vor der Oberfläche des Filtermediums Turbulenzen und Zentrifugalkräfte, die die gröberen Teilchen des zu filtrierenden Gemisches in der Filtratkammer radial nach außen gegen die Gehäusewand des Filters bewegen, wo sich die gröberen Partikel konzentrieren. Die Partikel werden von dort über den vorgesehenen Auslauf kontinuierlich oder diskontinuierlich abgeleitet.

Wenn die zu filtrierende Substanz den Raum vor dem Filtermedium (Filterkammer) ausgefüllt hat, dringt das Filtrat durch das Filtermedium. Da sich dieses zusammen mit der Welle um seine Längsachse dreht, haben die gröberen Partikel kaum die Möglichkeit sich am Filtermedium anzulegen. Das Filtrat gelangt durch das Filtermedium in die Filtratkammer und von dort durch mindestens eine Öffnung in das Innere der Hohlwelle. Da sich der entsprechende Hohlwellenabschnitt bis in die zweite Filterkammer erstreckt und eine in diese Filterkammer mündende Öffnung besitzt, wird das Filtrat in die zweite Filterkammer weitergeleitet. Dort findet ein entsprechender Filtrationsvorgang wie in der ersten Filterkammer statt, natürlich mit einer bereits einem ersten Filtrationsvorgang unterzogenen Substanz. Auch in dieser Kammer gelangen die gröberen Teilchen durch Turbulenzen und Zentrifugalkräfte, hervorgerufen durch das sich drehende Filtermedium, in der Filterkammer radial nach außen zur Gehäusewand und werden dort konzentriert. Das Filtrat dringt durch das Filtermedium in die Filtratkammer und gelangt von dort in den zweiten Hohlwellenabschnitt. Die Grobsubstanzen werden über einen Auslass aus der Filterkammer kontinuierlich oder diskontinuierlich abgeleitet. Das Filtrat gelangt vom zweiten Hohlwellenabschnitt zu einem Filtratauslauf.

Es versteht sich, dass in den beiden Stufen unterschiedliche Filtermedien zum Einsatz gelangen. Beispielsweise findet in der ersten Stufe ein Filtermedium Verwendung, mit dem Feststoffe mit einem Durchmesser größer 3 µm zurückgehalten werden, während in der zweiten Stufe ein Filtermedium Verwendung findet, mit dem Partikel mit einem Durchmesser größer 0,5 µm zurückgehalten werden. Je nach Anwendungsfall (zu filtrierende Substanz) können hierbei die unterschiedlichsten Ausführungsformen zur Anwendung gelangen.

Erfindungsgemäß können alle handelsüblichen Filtermedien zur Anwendung gelangen, je nach Anwendungsfall. Vorzugsweise werden solche Medien eingesetzt, die höheren Temperaturen und höheren Drücken standhalten. Die Drehzahl der Welle ist vorzugsweise über einen großen Bereich regelbar, beispielsweise von 50 bis 1500 UpM und wird je nach Anwendungsfall eingestellt.

Mit dem erfindungsgemäß ausgebildeten Rotationsfilter läßt sich eine Vielzahl von Substanzen filtrieren, beispielsweise Lebensmittel, wie Pflanzenöle, Bier, Wein, Trinkwasser, Brauchwasser, Abwasser, Rohöl. Je nach Verwendung der Filtermedien lassen sich aus diesen Substanzen sogar Coli - Bakterien herausfiltern. Der Filter kann mit Hilfe von Pumpen aber auch drucklos betrieben werden.

Da sich die Filtermedien in den verschiedenen Kammern zusammen mit der Welle mit einer relativ hohen Drehzahl drehen, können sich die gröberen Partikel (Feststoffpartikel) der zu filtrierenden Substanzen nicht oder nur in einem sehr geringen Umfang an den Filtermedien festsetzen. Im Bereich der Außenseite der Filtermedien entstehen Turbulenzen, und die gröberen Partikel der zu filtrierenden Substanz werden radial nach außen bewegt. Das hat den Vorteil, dass sich die Filtermedien mit den gröberen Substanzen nicht zusetzen, so dass bei dem erfindungsgemäß ausgebildeten Rotationsfilter aufwendige Reinigungsvorgänge entfallen können. Die Filtermedien bleiben daher im wesentlichen frei von sich ablagernden Feststoffen (Filterkuchen)und erreichen dadurch eine sehr hohe Standzeit.

Die Einsatzbereiche des Filters sind frei wählbar, da das gesamte Material den Gegebenheiten angepasst werden kann. Vorzugsweise wird durch eine Be- und Entlüftung während des Filtervorgangs ständig sich bildende Luft abgeleitet, um die Druckverhältnisse nicht zu stören.

Vorzugsweise weist die rotierende Welle mehrere aneinander gekoppelte Wellenabschnitte auf. Dabei kann die Koppelung beispielsweise so realisiert sein, dass ein Führungszapfen des einen Wellenabschnittes in das Wellenende des anderen Wellenabschnittes eingreift und dort mit einem Mitnehmerzapfen fixiert ist. Vorzugsweise weist jeder Wellenabschnitt einen Hohlwellenabschnitt auf und ist somit einer Stufe des Mehrstufenfilters zugeordnet. Zwischen den einzelnen Stufen befinden sich Lagereinrichtungen für die jeweiligen Wellenabschnitte.

Bei einer besonders bevorzugten Lösung der Erfindung ist der Rotationsfilter als stehender Filter ausgebildet. Hierbei befinden sich somit die einzelnen Stufen des Filters übereinander, wobei vorzugsweise die erste Stufe unter der zweiten Stufe benachbart zu dem einzigen Wellenantrieb angeordnet ist. Dies schließt nicht aus, dass auch Lösungen mit schräg oder horizontal verlaufender Welle realisiert werden können.

Zweckmäßigerweise besitzt jede Filterkammer einen Ablauf für die filtrierte Grobsubstanz und der letzte Hohlwellenabschnitt einen Filtratablauf. Die zu filtrierende Substanz wird über einen Zulauf in die erste Filterkammer eingeführt. Die jeweiligen Abläufe für die filtrierte Grobsubstanz sind radial außen im Bereich der Gehäusewand des Filters angeordnet, und zwar im unteren Teil der jeweiligen Filterkammern (bei stehendem oder geneigten Filter). Die Zuführung der zu filtrierenden Substanz erfolgt ebenfalls vorzugsweise radial außen.

In Weiterbildung der Erfindung ist in mindestens einer Filterkammer mindestens ein Leitblech fest angeordnet, wobei dieses Leitblech vorzugsweise Teil eines Leitblechkäfigs ist. Das Leitblech oder der Leitblechkäfig ist in der Filterkammer unmittelbar vor dem Filtermedium (radial außerhalb desselben) fest angebracht und erstreckt sich bis in die Nähe der Gehäusewand. Durch das Leitblech oder den Leitblechkäfig wird die Grobsubstanz (Feststoffpartikel) etwa radial (spiralförmig) in Richtung auf die Gehäusewand der Filterkammer geführt.

Das Leitblech oder die Leitbleche des Leitblechkäfigs erstrecken sich vorzugsweise spiralförmig von einem Punkt in der Nähe des Filtermedium zu einem Punkt in der Nähe der Gehäusewand der Filterkammer. Wie erwähnt, ist das Leitblech oder der Leitblechkäfig im Gegensatz zur rotierenden Welle mit dem Filtermedium fest in der Filterkammer angeordnet.

Die Erfindung wird nachfolgend anhand eines Ausführungsbeispieles in Verbindung mit der Zeichnung im einzelnen erläutert. Es zeigen:
- Figur 1: einen Vertikalschnitt durch einen Mehrstufenrotationsfilter, der 2 Filtrationsstufen aufweist; und
- Figur 2: einen Schnitt entlang Linie A - B in Figur 1.

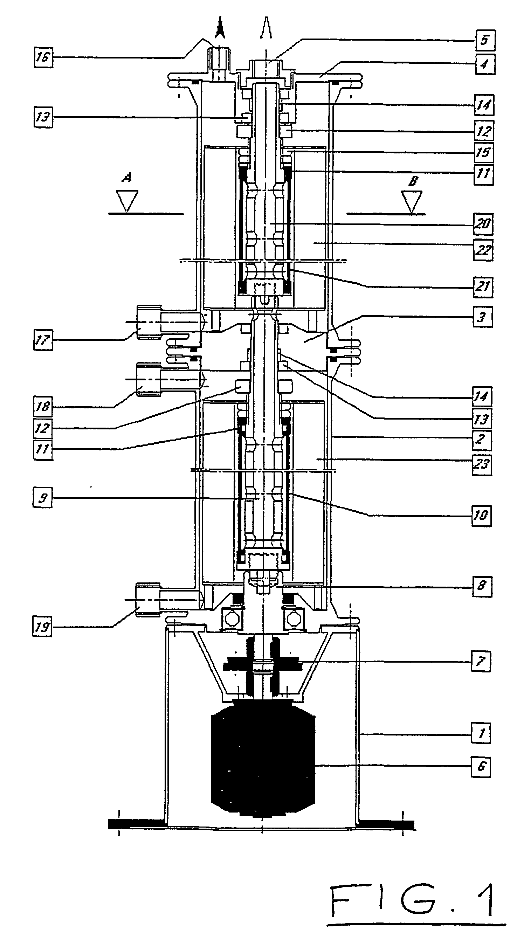

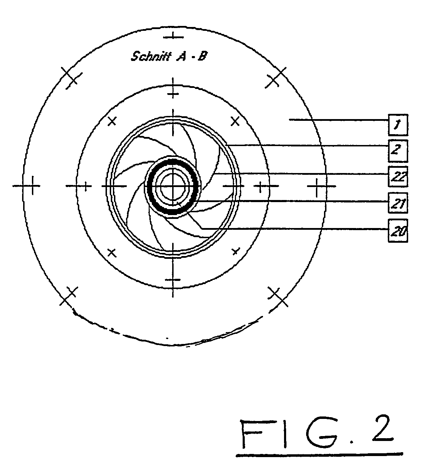

Bei dem in den Figuren 1 und 2 dargestellten Rotationsfilter handelt es sich um einen Zweistufenfilter, bei dem eine zweite Filtrationsstufe über einer ersten Filtrationsstufe angeordnet ist. Der Filter ist als stehender Filter ausgebildet. Im einzelnen ist der Filter wie folgt aufgebaut:

An einem Motorträger 1 ist ein Elektromotor 6 befestigt. Die Motorwelle treibt über eine Kupplung 7 einen Wellenzapfen 8 an. Im Wellenzapfen 8 ist ein unterer Hohlwellen abschnitt 9 über einen Führungsdorn und einen Mitnehmerzapfen eingerastet und wird in einer Zwischenplatte 3 über Dichtungen 13 und ein Sinterlager 14 geführt.

Der Filter setzt sich aus zwei übereinander angeordneten zylindrischen Gehäusen 2 zusammen, die zwischen sich die erwähnte Zwischenplatte 3 aufweisen. Das untere zylindrische Gehäuse ist am Motorträger 1 befestigt und über eine - untere Abschlussplatte geschlossen. Das obere zylindrische Gehäuse weist eine obere Abschlussplatte 4 auf und ist über einen entsprechenden Ringflansch mit einem Ringflansch des unteren Gehäuses unter Zwischenschaltung der Zwischenplatte 3 in abgedichteter Weise verbunden.

Der untere Hohlwellenabschnitt 9 erstreckt sich durch die Zwischenplatte 3 bis in das obere zylindrische Gehäuse. Im Wellenende des unteren Hohlwellenabschnittes sind ein Führungsdorn und ein Mitnehmerzapfen des oberen Hohlwellenabschnittes 20 angeordnet, so dass der untere und obere Hohlwellenabschnitt 9, 20 insgesamt eine einheitliche Welle bilden, die an ihrem oberen Ende durch die obere Platte 4 geführt wird. Die Welle ist dabei sowohl in der Zwischenplatte als auch in der oberen Platte durch Dichtungen 13 und Sinterlager 14 gelagert. Sie endet unter einem Abschlussstopfen 5.

Auf den beiden Hohlwellenabschnitten 9, 20 ist jeweils ein Filtermedium 10, 21 durch Mediumführungen 11 fixiert und zentriert, und zwar derart, dass es einen radialen Abstand zum Hohlwellenabschnitt aufweist und zwischen Hohlwellenabschnitt und Filtermedium eine Filtratkammer gebildet wird. Je nach Anwendungsfall können unterschiedliche Filtermedien Anwendung finden. Derartige Filtermedien sind bekannt und brauchen daher an dieser Stelle nicht im einzelnen erläutert zu werden.

Zwischen den Filtermedien 10, 21 und den zylindrischen Wänden der Filtergehäuse 2 sind Filterkammern gebildet, in denen sich jeweils ein Käfig aus Leitblechen 22, 23 befindet. Wie man Figur 2 entnehmen kann, erstreckt sich der Käfig von einem Punkt in der Nähe der Außenseite des jeweiligen Filtermediums bis zu einem Punkt in der Nähe der Innenseite der Gehäusewandung, wobei die Leitbleche 22, 23 spiralförmig von innen nach außen verlaufen. Die jeweiligen Käfige sind fest in der entsprechenden Filtratkammer angeordnet.

Die untere Filterkammer weist an ihrem oberen Ende einen Einlauf 18 für die zu filtrierende Substanz (Suspension) und an ihrem unteren Ende einen Auslauf 19 für die filtrierte Grobsubstanz auf. Auch die obere Filterkammer hat an ihrem unteren Ende einen Auslass 17 für die Grobsubstanz. Ein Filtratauslauf befindet sich am oberen Ende der Welle und ist dort in dem erwahnten Abschlussstopfen angeordnet.

Der beschriebene Rotationsfilter funktioniert in der folgenden Weise:

Über eine Pumpe wird eine Suspension durch den Einlass 18 in die untere Filterkammer eingeleitet. Wenn die Suspension den Raum der Filterkammer vor dem Filtermedium 10 ausgefüllt hat, verbleibt nur noch der Weg durch das Filtermedium 10. Da dieses Filtermedium 10 zusammen mit der Welle, bestehend aus den beiden Hohlwellenabschnitten 9 und 20, mit einer sehr hohen Umdrehungszahl, beispielsweise 1.400 U/min., um seine Längsachse gedreht wird, besteht für die in der Suspension enthaltenen Feststoffe kaum eine Möglichkeit, sich am Filtermedium 10 anzulegen.

Durch die leicht rauhe Oberfläche des Filtermediums 10 entstehen Turbulenzen vor dieser Oberfläche. Die Feststoffpartikel werden durch den Käfig aus Leitblechen 23, die unmittelbar berührungslos vor dem Filtermedium 10 fest angebracht sind, in der Filterkammer radial nach außen bis zur Wand des Gehäuses 2 geführt. Hier konzentrieren sich die Feststoffe und werden über den Auslass 19 kontinuierlich oder diskontinuierlich abgeleitet. Die Stärke der Konzentrierung wird vom Betreiber vorgegeben, jedoch müssen die Feststoffe fließfähig sein. Im vorliegenden Ausführungsbeispiel können in der unteren Filterkammer Feststoffe größer 3 µm zurückgehalten werden.

Das relativ saubere Filtrat dringt durch das Filtermedium 10 in die Filtratkammer ein und gelangt von dort über die im Hohlwellenabschnitt 9 vorgesehenen Radialöffnungen in das Innere der Hohlwelle. Es wird von dort nach oben geleitet und gelangt über eine radiale Austrittsöffnung von der Hohlwelle in die obere Filterkammer. In dieser Filterkammer findet im wesentlichen der gleiche Vorgang wie in der unteren Filterkammer statt, mit dem Unterschied, dass es sich hierbei um eine Filtration des bereits einem Filtrationsvorgang unterzogenen Filtrates handelt. Auch in dieser Filterkammer ist ein Käfig mit Leitblechen 22 analog zu der Anordnung in der unteren Filterkammer vorgesehen. Das zugehörige Filtermedium 21 ist natürlich wesentlich feiner ausgebildet als das Filtermedium der unteren Kammer. Beispielsweise werden durch das Filtermedium 21 Partikel größer 0,5 µm zurückgehalten und aus der oberen Filterkammer diskontinuierlich über den Ablauf 17 abgeleitet.

Das nun saubere Filtrat, das durch das Filtermedium 21 in die obere Filtratkammer eingedrungen ist, gelangt über Radialöffnungen im oberen Hohlwellenabschnitt 20 in das Innere der Hohlwelle und wird von dort nach oben durch den Abschlussstopfen 5 und den Auslauf kontinuierlich geregelt abgeleitet.

Der gesamte Filtrationsablauf wird durch eine selbstregelnde Steuerung unterstützt.

Erwähnt seien schließlich noch Ausgleichsringe 12 und Spannringe 15, die um die Wellenabschnitte herum vorgesehen sind. Eine weitere Öffnung 16 aus der oberen Filterkammer dient zum Be- und Entlüften, Spülen und Desinfizieren.

## Patentansprüche

1. Rotationsfilter mit einer rotierenden Welle, einem im Abstand von der Welle angeordneten und mit dieser unter Ausbildung einer Filtratkammer drehfest verbundenen Filtermedium und einem das Filtermedium (10,21) unter Ausbildung einer die zu filtrierende Substanz aufnehmenden Filterkammer umgebenden Filtergehäuse (2), wobei die Welle als Hohlwelle mit mindestens einer Öffnung zur Aufnahme und Abführung des Filtrates aus der Filtratkammer ausgebildet ist,
**dadurch gekennzeichnet, dass**
der Filter als Mehrstufenfilter mit mindestens zwei Filtratkammern und diesen zugeordneten Filterkammern ausgebildet ist, die entlang der einen einzigen Antrieb (6) aufweisenden Welle vorgesehen sind,
die Welle jeweils einen einer Filtratkammer zugeordneten Hohlwellenabschnitt (9, 20) mit mindestens einer Öffnung zur Aufnahme und Abführung des Filtrates aus der jeweiligen Filtratkammer aufweist und
sich der jeweilige Hohlwellenabschnitt (9) bis in die nächste Filterkammer erstreckt und eine in diese Filterkammer mündende Öffnung zur Weiterleitung des Filtrates in die nächste Filterkammer besitzt.

2. Rotationsfilter nach Anspruch 1, **dadurch gekennzeichnet, dass** die rotierende Welle mehrere aneinandergekoppelte Wellenabschnitte (9,20) aufweist.

3. Rotationsfilter nach Anspruch 1 oder 2, **dadurch gekennzeichnet, dass** er als stehender Filter ausgebildet ist.

4. Rotationsfilter nach einem der vorangehenden Ansprüche, **dadurch gekennzeichnet, dass** die erste Filterkammer einen Zulauf (18) für die zu filtrierende Substanz, jede Filterkammer einen Ablauf (17, 19) für die filtrierte Grobsubstanz und der letzte Hohlwellenabschnitt (20) einen Filtratablauf (5) aufweisen.

5. Rotationsfilter nach einem der vorangehenden Ansprüche, **dadurch gekennzeichnet, dass** in mindestens einer Filterkammer mindestens ein Leitblech (22, 23) fest angeordnet ist

6. Rotationsfilter nach Anspruch 5, **dadurch gekennzeichnet, dass** in der Filterkammer ein Leitblechkäfig fest angeordnet ist.

## Claims

1. A rotary filter comprising a rotating shaft, a filter medium spaced from said shaft and non-rotatably connected to the same so that a filtrate chamber is formed, and a filter housing (2) surrounding the filter medium (10, 21) so that a filter chamber is formed which takes up the substance to be filtered, wherein the shaft is formed as hollow shaft with at least one aperture for the uptake and discharge of the filtrate from the filtrate chamber,
**characterized in that**
the filter is formed as multi-stage filter with at least two filtrate chambers and filter chambers associated therewith which are provided along the shaft having a single drive (6),
the shaft has a hollow shaft portion (9, 20) associated with a respective filtrate chamber and having at least one aperture for the uptake and discharge of the filtrate from the respective filtrate chamber and
the respective hollow shaft portion (9) extends into the next filter chamber and has an aperture opening into this filter chamber for further supplying the filtrate into the next filter chamber.

2. The rotary filter according to claim 1, **characterized in that** the rotating shaft has a plurality of coupled shaft portions (9, 20).

3. The rotary filter according to claim 1 or 2, **characterized in that** it is formed as an upright filter.

4. The rotary filter according to one of the preceding claims, **characterized in that** the first filter chamber has an inlet (18) for the substance to be filtered, each filter chamber has an outlet (17, 19) for the filtered coarse substance and the last hollow shaft portion (20) has a filtrate outlet (5).

5. The rotary filter according to one of the preceding claims, **characterized in that** at least one baffle plate (22, 23) is disposed in a fixed manner in at least one filter chamber.

6. The rotary filter according to claim 5, **characterized in that** a baffle plate cage is disposed in a fixed manner in the filter chamber.

## Revendications

1. Filtre rotatif avec un arbre rotatif, un milieu filtrant disposé à distance de l'arbre et relié à celui-ci de manière à ne pas tourner en formant une chambre de filtrat et un logement de filtre (2) entourant le milieu filtrant (10, 21) en formant une chambre de filtration accueillant la substance à filtrer, l'arbre étant conformé comme un arbre creux avec au moins une ouverture pour accueillir et évacuer le filtrat de la chambre de filtrat
**caractérisé en ce que**
le filtre est conformé comme un filtre à plusieurs étages avec au moins deux chambres de filtrat et des chambres de filtration coordonnées à celles-ci qui sont prévues le long de l'arbre présentant un seul entraînement (6)
l'arbre présente chaque fois une section (9, 20) d'arbre creux associée à une chambre de filtrat avec au moins une ouverture pour accueillir et évacuer le filtrat de la chambre de filtrat concernée, et
la section (9) d'arbre creux concernée s'étend jusque dans la chambre de filtration suivante et a une ouverture débouchant dans cette-chambre de filtration pour acheminer le filtrat dans la chambre de filtration suivante.

2. Filtre rotatif selon la revendication 1, **caractérisé en ce que** l'arbre rotatif présente plusieurs sections (9, 20) d'arbre accouplées les unes aux autres.

3. Filtre rotatif selon la revendication 1 ou 2, **caractérisé en ce qu'**il est conformé comme un filtre debout.

4. Filtre rotatif selon une des revendications précédentes, **caractérisé en ce que** la première chambre de filtration présente une amenée (18) pour la substance à filtrer, toutes les chambres de filtration présentent une décharge pour la substance grossière filtrée et la dernière section (20) d'arbre creux présente une décharge (5) du filtrat.

5. Filtre rotatif selon une des revendications précédentes, **caractérisé en ce qu'**au moins une tôle de guidage (22, 23) est disposée de manière fixe dans au moins une chambre de filtration.

6. Filtre rotatif selon la revendication 5, **caractérisé en ce qu'**une cage de tôle de guidage est disposée de manière fixe dans la chambre de filtration.
